# EUROPÄISCHE PATENTSCHRIFT

(11) **EP 0 729 054 B1**
(45) Veröffentlichungstag und Bekanntmachung des Hinweises auf die Patenterteilung: **02.10.2002**
(21) Anmeldenummer: 96100530.3
(22) Anmeldetag: 16.01.1996
(51) Int. Cl.: G02B 27/22, H04N 13/00

(54) **Vorrichtung und Verfahren zur autostereoskopischen Darstellung von dreidimensionalen Strukturen**
Device and method for autostereoscopically displaying three-dimensional structures
Dispositif et méthode pour l'affichage autostéréoscopique de structures à trois dimensions

(30) Priorität: 25.02.1995 DE 19506648
(43) Veröffentlichungstag der Anmeldung: 28.08.1996
(73) Patentinhaber: Universität Stuttgart, 70174 Stuttgart (DE)
(72) Erfinder: Lüder, Ernst, Prof. Dr.-Ing. habil, 70192 Stuttgart (DE); Bader, Gerhard, Dipl.-Ing, D-72639 Neuffen (DE)
(74) Vertreter: Möbus, Rudolf, Dipl.-Ing.

(56) Entgegenhaltungen:
- EP-A- 0 332 959
- EP-A- 0 602 934
- DE-A- 3 712 170
- GB-A- 2 252 175

## Beschreibung

Die Erfindung betrifft eine Vorrichtung und ein Verfahren zur autostereoskopischen Darstellung von dreidimensionalen Strukturen mit einem Display-System zur Darstellung mehrerer unterschiedlicher zweidimensionaler Ansichten der dreidimensionalen Strukutur, vor dem Display-System angeordneten optischen Abbildungseinrichtungen sowie mit einem Schirm, der die aus den optischen Abbildungseinrichtungen austretenden Lichtstrahlen in eine Beobachtungsebene abbildet, wobei die zweidimensionalen Einzelansichten in entweder mit dem rechten oder dem linken Auge beobachtbaren Zonen dieser Ebene erscheinen.

Es gibt viele Anwendungsbereiche, in denen eine dreidimensionale Bildwiedergabe gegenüber einer lediglich zweidimensionalen Darstellung Vorteile bietet. Autostereoskopische Darstellungen eignen sich insbesondere im Bereich der Medizin, beispielsweise zur dreidimensionalen Darstellung von Röntgenaufnahmen oder Computertomogrammen, sowie im Bereich des computerunterstützten Entwurfes in Maschinenbau, Architektur oder Chemie. Eine Vorrichtung zur autostereoskopischen Darstellung läßt sich ferner zur dreidimensionalen Visualisierung von wissenschaftlichen Daten und Vorgängen oder als Sichtgerät für ein Fernsehsystem mit dreidimensionaler Bildwiedergabe einsetzen.

Zur Realisierung einer autostereoskopischen Darstellung dreidimensionaler Strukturen sind schon verschiedene Vorschläge gemacht worden. Eine Vorrichtung der genannten Art ist beispielsweise in der DE 37 12 170 beschrieben. Autostereoskopische Systeme besitzen gegenüber den stereoskopischen Systemen dabei den Vorteil, daß mehrere Betrachter das dargestellte Bild dreidimensional ohne Hilfsmittel sehen können und daß durch Veränderung der Betrachtungsposition neue Ansichten zum Vorschein kommen. Hierbei sind bereits Systeme beschrieben worden, mit denen über zwanzig Einzelansichten darstellbar sind. Dies ist derzeit weder mit holografischen noch mit anderen 3D-Techniken realisierbar.

Nachteilig an den bekannten Systemen ist jedoch, daß durch die diskrete Anzahl von dargestellten Ansichten bei seitlicher Bewegung des Betrachters sprunghafte Änderungen des dreidimensionalen Bildes auftreten. Diese sprunghaften Änderungen des Bildes bei einer seitlichen Bewegung werden vom Betrachter als sehr störend empfunden. Diese sprunghaften Bildänderungen treten auch auf, wenn das Bild aus einem nicht optimalen Abstand zum Bildschirm betrachtet wird.

Der Erfindung liegt die Aufgabe zugrunde, eine autostereoskopische Darstellung dreidimensionaler Strukturen unter Vermeidung der obengenannten Nachteile zu ermöglichen.

Die Aufgabe wird durch ein Verfahren zur autostereoskopischen Darstellung von dreidimensionalen Strukturen durch Abbilden mehrerer zweidimensionaler Ansichten der dreidimensionalen Struktur in eine Beobachtungsebene, wobei die zweidimensionalen Einzelansichten in entweder mit dem linken oder mit dem rechten Auge beobachtbaren Zonen erscheinen, gelöst, das erfindungsgemäß dadurch gekennzeichnet ist, daß Überlappungsbereiche zwischen den Beobachtungszonen erzeugt werden und daß die Beleuchtungsintensität der einzelnen Beobachtungszonen an den Rändern durch Aperturblenden reduziert ist. Außerdem ist die Aufgabe mit einer Vorrichtung der eingangs genannten Art lösbar, die erfindungsgemäß dadurch gekennzeichnet ist, daß die optischen Abbildungseinrichtungen jeweils Aperturblenden aufweisen, die in einem Übergangsbereich jeweils sich überlappende Beobachtungszonen erzeugen, wobei die Beleuchtungsintensität an den Rändern der Aperturblenden reduziert ist.

Diese Überlappungsbereiche ermöglichen ein kontinuierliches Überblenden der einzelnen Ansichten bei einer Bewegung des Betrachters. Die störenden Sprünge des Bildes bei den seither bekannten Systemen wird hierdurch vermieden. Durch die Abnahme der Beleuchtungsintensität an den Rändern der Aperturblenden, die vorteilhafterweise stetig und auf eine Weise erfolgen kann, daß sich insgesamt eine gleichmäßige Intensitätsverteilung über alle Beobachtungszonen ergibt, werden Intensitätssprünge in den Überlappungsbereichen vermieden. Hierdurch werden auch die sprunghaften Übergänge der einzelnen Bildschirmzonen bei einer Betrachtung des Bildes aus nicht optimalem Abstand, bei dem mit einem Auge gleichzeitig Bereiche verschiedener zweidimensionaler Ansichten aufgenommen werden, verbessert. Vorteilhafte Weiterbildungen einer erfindungsgemäßen Vorrichtung sind in den Unteransprüchen beschrieben und werden anhand der Zeichnung näher erläutert.

Es zeigen:
- Fig. 1a, b: eine Prinzipdarstellung der sprunghaften Bildänderung bei einer seitlichen Bewegung des Beobachters bei herkömmlichen autostereoskopischen Systemen sowie der Verlauf der Beleuchtungsintensität in der Beobachtungsebene;
- Fig. 2a, b: eine Prinzipdarstellung der kontinuierlichen Bildänderung bei einer seitlichen Bewegung des Beobachters bei einem erfindungsgemäßen System sowie der Verlauf der Beleuchtungsintensität in der Beobachtungsebene;
- Fig. 3: eine Strahlengangdarstellung im Beobachtungsraum eines autostereoskopischen Systems bei Betrachtung aus nicht optimalem Abstand;
- Fig. 4a, b, c: ein Beispiel eines aus verschiedenen Bildschirmzonen zusammengesetzten Bildes, welches bei Betrachtung aus nicht optimalem Abstand gemäß Fig. 3 wahrgenommen wird sowie der Intensitätsverläufe des Bildes mit und ohne Überlappungszonen;
- Fig. 5a, b: eine erfindungsgemäße Vorrichtung mit kontinuierlichem Überblenden der Beobachtungszonen in perspektivischer Ansicht sowie der zugehörige Intensitätsverlauf in horizontaler Richtung;
- Fig. 6a, b, c: eine Darstellung sich überlappender Austrittspupillen von Aperturblenden sowie des Aufbaus einer Aperturblende mit kontinierlichem Transmissionsverlauf an den Rändern;
- Fig. 7: eine Prinzipdarstellung einer zweiten Vorrichtung zur autostereoskopischen Darstellung;
- Fig. 8: eine Prinzipdarstellung einer Vorrichtung zur autostereoskopischen Darstellung mit mehreren Lichtquellen;
- Fig. 9: eine Prinzipdarstellung einer Vorrichtung zur autostereoskopischen Darstellung mit einer einzelnen Lichtquelle;
- Fig. 10a, b: eine perspektivische Darstellung einer dritten Ausführungsform einer erfindungsgemäßen Vorrichtung mit zugehörigem Intensitätsverlauf in horizontaler Richtung;
- Fig. 11a, b: eine Darstellung der Abbildungseinrichtungen einer Vorrichtung nach Fig. 10 mit zugehörigem Intensitätsverlauf in horizontaler Richtung.

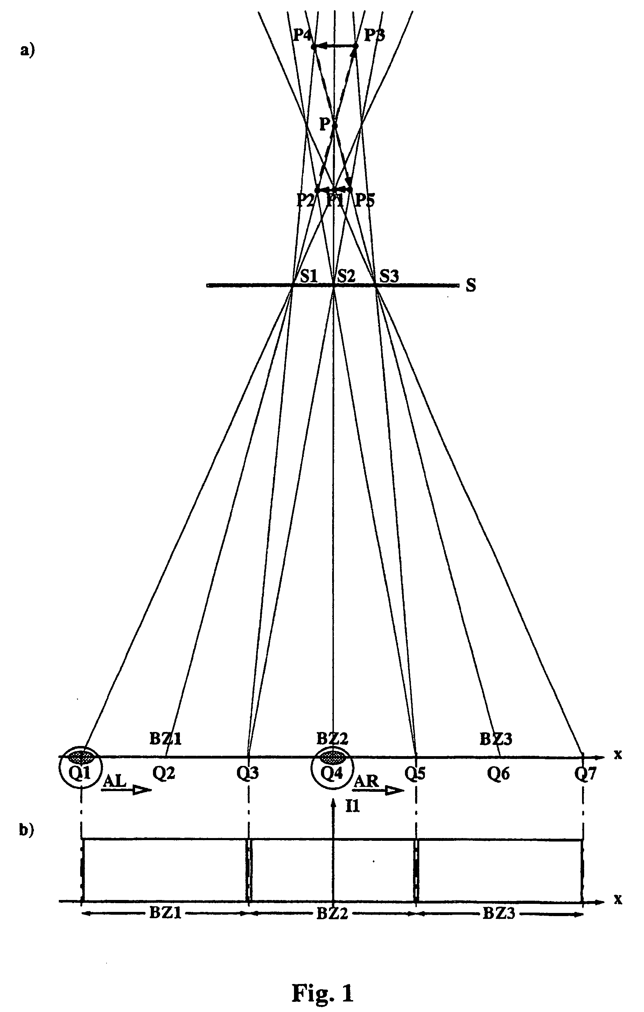

Ein Teil der Flächen in den Figuren sind zur besseren Verdeutlichung dunkel unterlegt. In Fig. 1 werden die Effekte bei einer seitlichen Bewegung des Beobachters bei herkömmlichen autostereoskopischen Systemen mit scharf gegeneinander abgegrenzten Beobachtungszonen verdeutlicht. Es sind drei Beobachtungszonen BZ1 bis BZ3 sowie ein Schirm S des autostereoskopischen Systems dargestellt. Der Verlauf der Beleuchtungsintensität I1 in horizontaler Richtung in den einzelnen Beobachtungszonen BZ1 bis BZ3 ist in Form eines Diagrammes ebenfalls mitangegeben. Von einem darzustellenden Raumpunkt P sind jeweils drei Ansichten S1, S2, S3 von den Beobachtungszonen BZ1, BZ2 und BZ3 aus auf dem Schirm S der Vorrichtung sichtbar. Die Ansichten S1, S2, S3 werden durch den Schnittpunkt der Verbindungsgeraden, die durch den Punkt P und die Mitte Q2, Q4, Q6 der jeweiligen Beobachtungszone BZ1, BZ2 oder BZ3 verläuft, mit dem Schirm S festgelegt. Das linke Auge AL eines Beobachters befindet sich am Anfang am linken Rand Q1 der Beobachtungszone BZ1 und das rechte Auge AR in der Mitte Q4 der Beobachtungszone BZ2. Der Raumpunkt P erscheint an der Position P1, die durch den Schnittpunkt der beiden Geraden durch die Punkte Q1 und S1 sowie Q4 und S2 festgelegt ist. Bei einer seitlichen Bewegung des Beobachters nach rechts scheint der Raumpunkt P von Position P1 nach P2 zu wandern, bis das rechte Auge AR auf eine Beobachtungszonengrenze an der Stelle Q5 trifft. Überschreitet das rechte Auge AR diese Beobachtungszonengrenze Q5 so scheint sich die Lage des Raumpunktes P sprunghaft von Position P2 nach Position P3 zu ändern. Bei einer weiteren Bewegung des Beobachters nach rechts wandert der Raumpunkt P in Richtung Position P4. Dort trifft nun das linke Auge AL auf eine Beobachtungszonengrenze bei Q3. Beim Überschreiten von Q3 ändert der Raumpunkt P seine Lage wiederum sprunghaft von P4 nach P5. Wenn der Beobachter mit dem rechten Auge AR Position Q7 erreicht, hat der Raumpunkt wieder die ursprüngliche Position P1 eingenommen. Diese störende sprunghafte Veränderung des Bildes soll durch die vorliegende Erfindung vermieden werden.

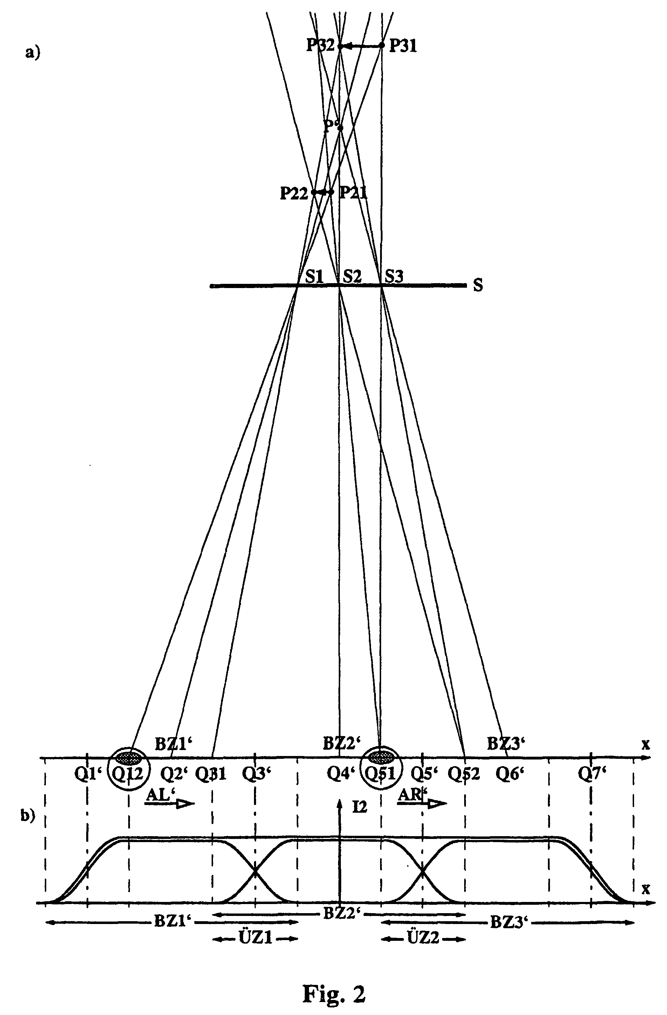

Fig. 2 zeigt die der Fig. 1 entsprechende Darstellung des Bildeindruckes eines Raumpunktes bei seitlicher Bewegung des Beobachters, wenn ein erfindungsgemäßes Verfahren angewendet wird, bei dem Übergangszonen ÜZ1 und ÜZ2 zwischen den Beobachtungszonen BZ1', BZ2' und BZ3' gebildet werden. In diesen Übergangsbereichen ÜZ1 und ÜZ2 ändert sich die Beleuchtungsintensität I2 kontinuierlich. Die Veränderung der Beleuchtungsintensität in den Übergangsbereichen ÜZ1 und ÜZ2 erfolgt dabei derart, daß die Summe der Einzelbeiträge der Beobachtungszonen BZ1' und BZ2' bzw. BZ2' und BZ3' konstant bleibt, wie dem in Fig. 2 ebenfalls dargestellten Diagramm für die Beleuchtungsintensität I2 entnommen werden kann. Zu Beginn des Bewegungsablaufes befindet sich das linke Auge AL' eines Beobachters gemäß Fig. 2 bei Position Q12 und das rechte Auge AR' bei Position Q51. Ein Raumpunkt P wird vom Beobachter an der Stelle P21 wahrgenommen. Wenn sich der Beobachter nun nach rechts bewegt, bis das linke Auge AL' in der Position Q31 und das rechte Auge AR' durch die Übergangszone ÜZ2 hindurch zum Punkt Q52 gelangt, wandert der Raumpunkt von Position P21 zu Position P22. Dabei nimmt die Helligkeit des Punktes kontinuierlich bis auf Null an der Position P22 ab. Gleichzeitig wird an der Position P31 ein zur Position P32 wandernder Punkt sichtbar, dessen Helligkeit kontinuierlich zunimmt. Am Ende des Bewegungsablaufes ist nur noch der Punkt an der Position P32 sichtbar. Die sprunghafte Änderung der Punktposition, wie sie im in Fig. 1 gezeigten Beispiel auftritt, wird hier also durch ein kontinuierliches Überblenden bei einer seitlichen Beobachterbewegung verbessert.

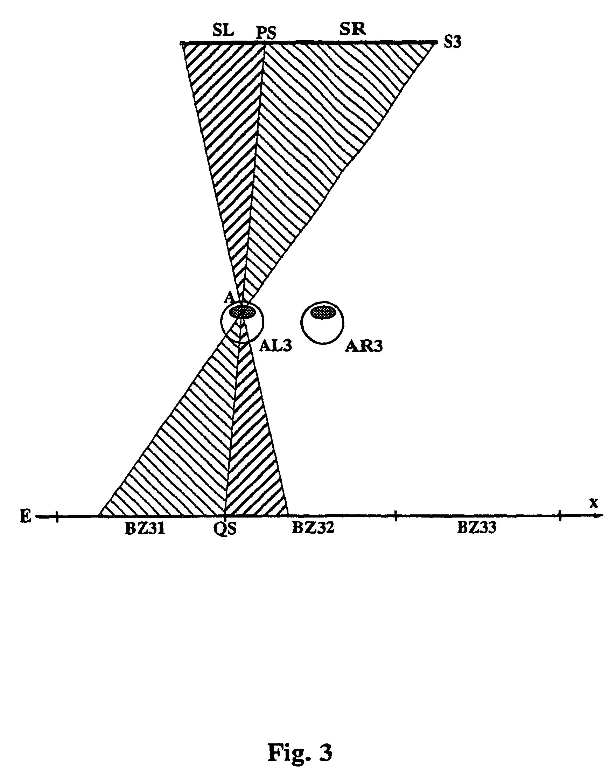

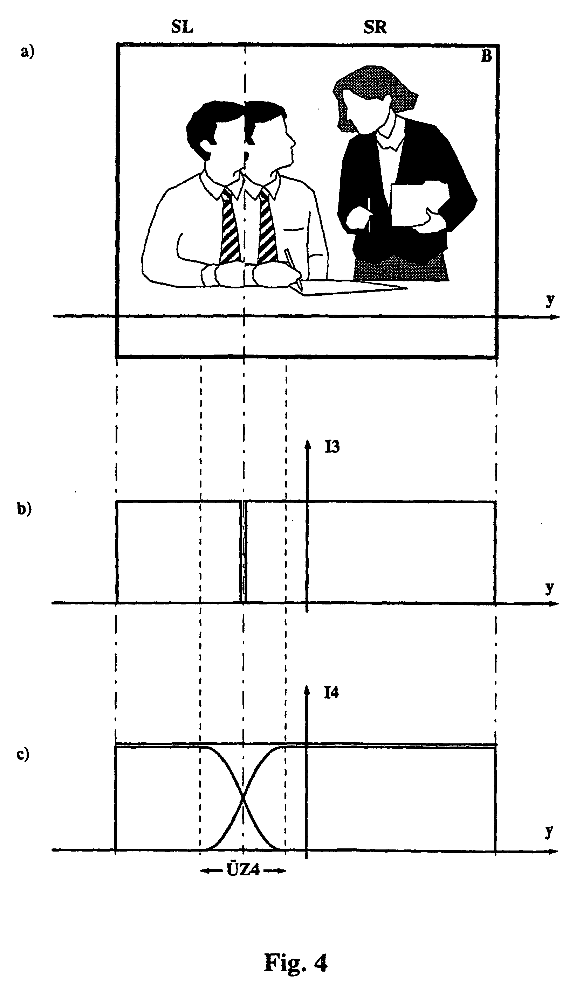

Die Fig. 3 und 4 verdeutlichen den Bildeindruck bei autostereoskopischen Systemen, wenn der Betrachter sich vor der optimalen Betrachtungsebene befindet. In Fig. 3 sind drei scharf gegeneinander abgegrenzte Beobachtungszonen BZ31 bis BZ33 in der optimalen Betrachtungsebene E dargestellt. Es sind außerdem die Strahlverläufe durch die Pupille A des linken Auges AL3 eines Beobachters gezeigt. Der vom linken Auge AL3 auf einem Schirm S3 wahrgenommene Bildeindruck ergibt sich wie folgt: Auf dem linken Schirmbereich SL schneiden die vom Schirm S3 ausgehenden und durch den Punkt A verlaufenden Strahlen die Betrachtungsebene E in der Beobachtungszone BZ32. Demzufolge wird auf dem linken Schirmbereich SL die zweite zweidimensionale Ansicht des Bildes gesehen. Die Strahlen des rechten Schirmbereiches SR verlaufen durch die Beobachtungszone BZ31 und lassen somit die erste zweidimensionale Ansicht sichtbar werden. Die Grenzen zwischen linkem und rechtem Schirmbereich SL und SR sind durch den Schnittpunkt PS zwischen dem Schirm S3 und der Verbindungsgeraden, die durch den Punkt A und die Beobachtungszonengrenze am Punkt QS verläuft, festgelegt. Das vom linken Auge wahrgenommene Bild ist somit aus zwei Bildschirmzonen SL und SR zusammengesetzt, die scharf aneinandergrenzen. Da in den verschiedenen Bildschirmzonen unterschiedliche Ansichten dargestellt werden, ändert sich auch der Bildinhalt an der Grenze PS der Bildschirmzonen sprunghaft. Wird jedoch ein Übergangsbereich an der Grenze QS der Beobachtungszonen BZ31 und BZ32 gemäß der Erfindung realisiert, so entsteht auch ein Übergangsbereich an der Grenze PS der Bildschirmzonen. Dies ist in Fig. 4 verdeutlicht. Fig. 4a) zeigt das vom linken Auge wahrgenommene Bild B. Das Diagramm in Fig. 4b) gibt den Verlauf der Beleuchtungsintensität I3 entlang der Bildschirmzonen bei einem autostereoskopischen System mit scharf abgegrenzten Beobachtungszonen, wie in Fig. 3 gezeigt, wieder. In Fig. 4c) ist der Verlauf der Beleuchtungsintensität I4 in einem erfindungsgemäßen Display-System dargestellt. Der Verlauf der Beleuchtungsintensität im Übergangsbereich ÜZ4 zwischen zwei Beobachtungszonen ist dabei so dimensioniert, daß die Beleuchtungsintensität über alle Bildschirmzonen hinweg insgesamt konstant bleibt.

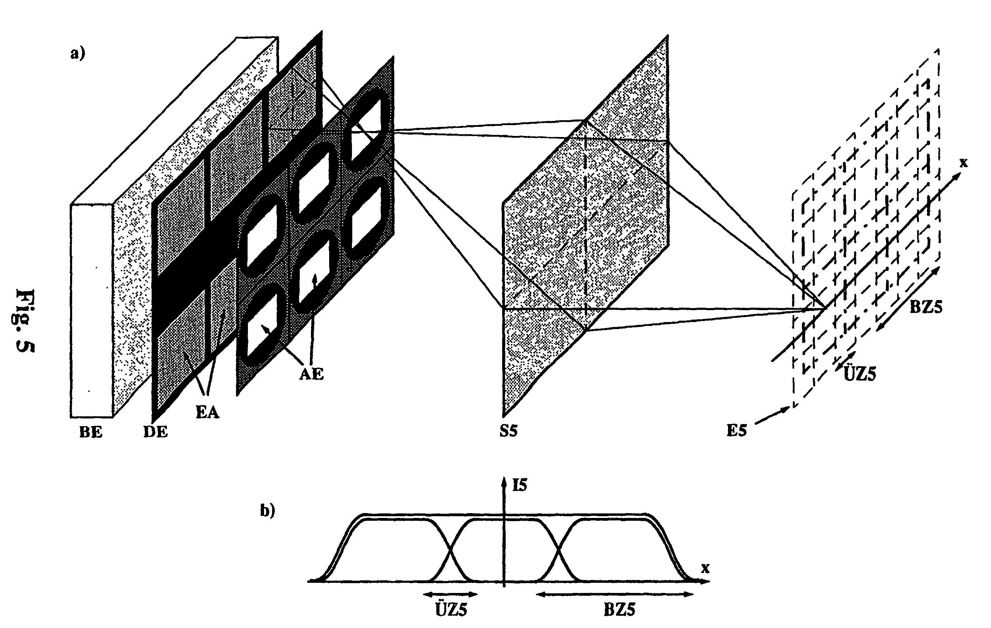

Fig. 5 zeigt eine erste Realisierungsmöglichkeit einer erfindungsgemäßen Vorrichtung zur autostereoskopischen Darstellung dreidimensionaler Strukturen. Vor einer Beleuchtungseinheit BE ist eine Display-Einheit DE mit sechs verschiedenen zweidimensionalen Ansichten EA einer nicht näher dargestellten dreidimensionalen Struktur angeordnet. Jeder dieser Ansichten EA ist eine optische Abbildungseinrichtung AE zugeordnet, die die von den Einzelansichten ausgehenden Strahlen auf einen Schirm S5 mit sammelnden und abbildenden Eigenschaften projiziert. Vor dem Schirm S5 können in einer optimalen Betrachtungsebene E5 die Einzelansichten in verschiedenen Beobachtungszonen BZ5 betrachtet werden. Die Breite der Beobachtungszonen BZ5 darf hierzu den mittleren Augenabstand von 65 mm nicht überschreiten. Es befinden sich dann das linke und das rechte Auge eines Betrachters in verschiedenen Beobachtungszonen BZ5 und sehen somit verschiedene Ansichten, wodurch ein dreidimensionaler Bildeindruck entsteht. Zwischen den einzelnen Beobachtungszonen sind sogenannte Übergangszonen ÜZ5, die durch Überlappung zweier Beobachtungszonen BZ5 entstehen, angeordnet. Hier sorgt die besondere Ausgestaltung der optischen Abbildungseinrichtungen AE dafür, daß die Intensität I5 an den Rändern der einzelnen Beobachtungszonen BZ5 abnimmt, so daß sich insgesamt ein konstanter Intentsitätsverlauf über sämtliche Beobachtungszonen BZ5 ergibt.

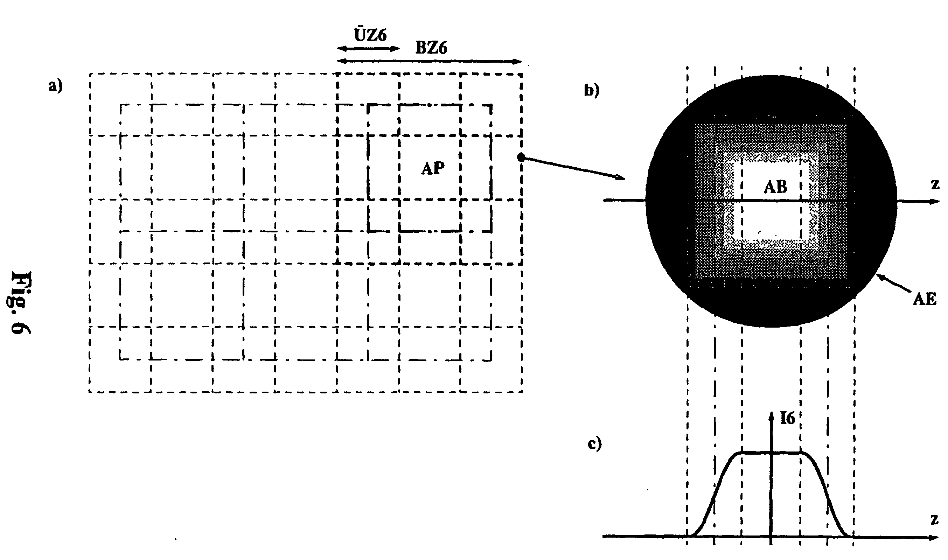

Eine mögliche Ausgestaltung einer Abbildungseinrichtung AE ist in Fig. 6b) dargestellt. Die Abbildungseinrichtungen AE sind dabei derart angeordnet, daß sich ihre Austrittspupillen AP überlappen, wodurch sich die Übergangsbereiche ÜZ5 in Fig. 5 ergeben. An den Rändern der Austrittspupillen AP nimmt der Verlauf der Beleuchtungsintensität I6 erfindungsgemäß kontinuierlich bis auf Null ab. Dies wird durch einen entsprechenden Verlauf der Beleuchtungsintensität in der Aperturblende AB der Abbildungseinrichtungen AE erreicht. Insbesondere kann der gewünschte Verlauf der Beleuchtungsintensität I6 dadurch realisiert werden, daß der Rand der Aperturblende AB einen kontinuierlichen Übergang der Transmission auf den Wert Null aufweist.

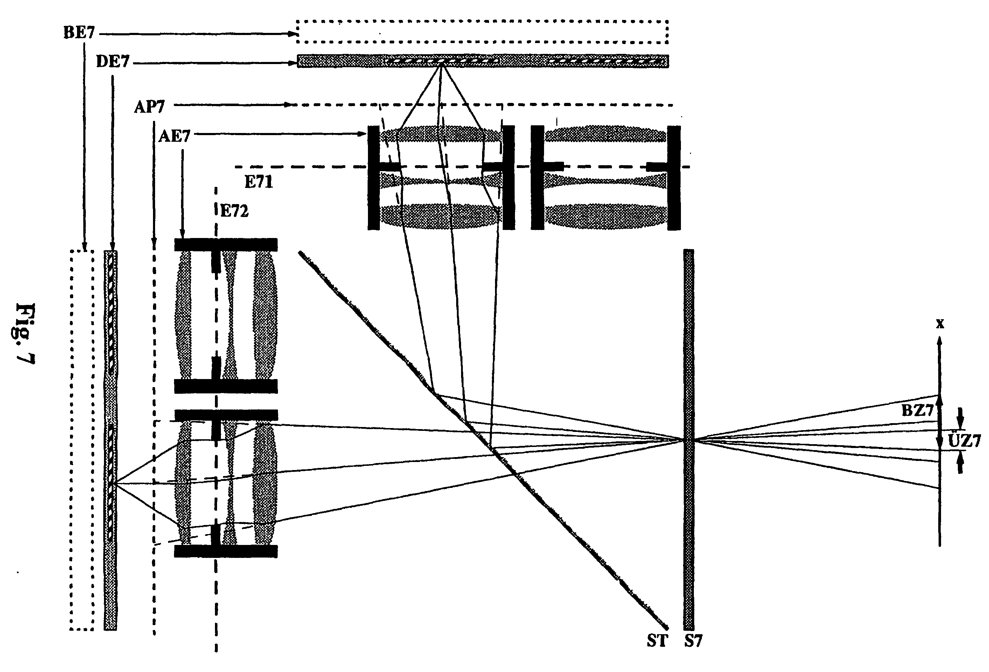

Fig. 7 zeigt eine weitere Variante einer erfindungsgemäßen Vorrichtung, in dem die Einzelansichten auf Display-Elementen DE7 ebenso wie die zugehörigen Abbildungseinrichtungen AE7 in unterschiedlichen, zueinander senkrecht stehenden Ebenen E71 und E72 angeordnet sind. Hierdurch lassen sich überlappende Austrittspupillen AP7 der einzelnen Abbildungseinrichtungen AE7 leichter realisieren. Die optischen Achsen der einzelnen Abbildungseinrichtungen AE7 werden dabei über einen Strahlteiler ST zusammengeführt.

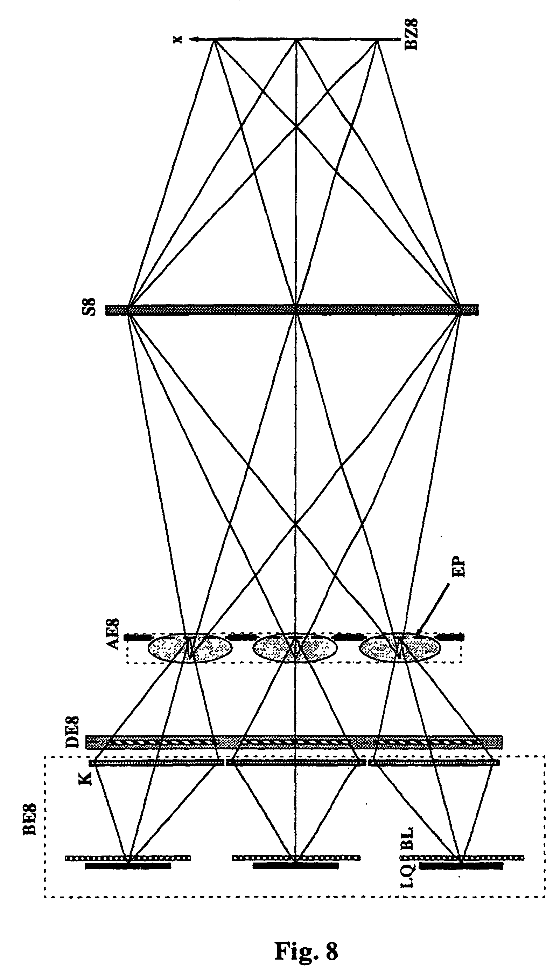

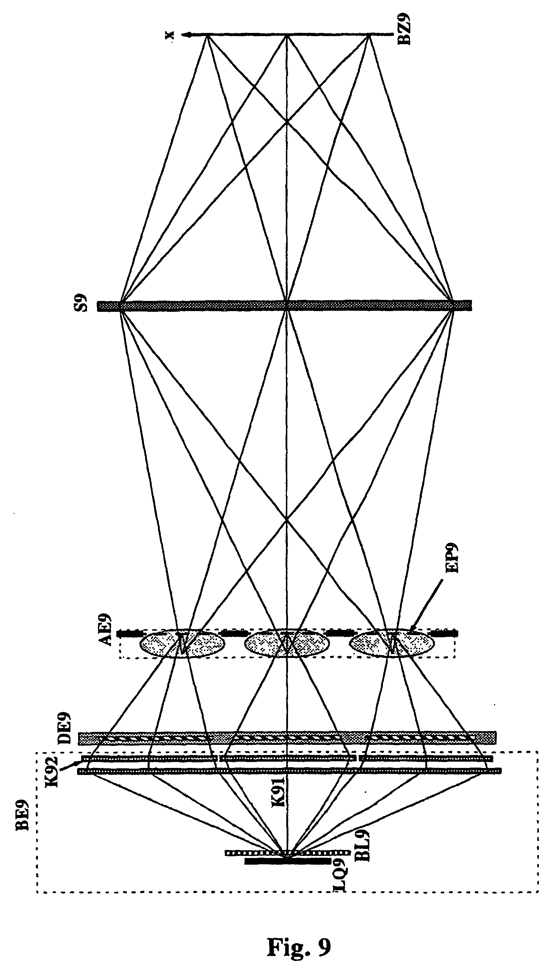

Die Fig. 8 und 9 zeigen unterschiedliche Ausgestaltungsmöglichkeiten einer Beleuchtungseinrichtung, die bei nicht selbstleuchtenden Displays erforderlich ist. In Fig. 8 weist die Beleuchtungseinrichtung BE8 drei verschiedene Lichtquellen LQ entsprechend den drei auf der Display-Einheit DE8 enthaltenen Displays auf. Jede der Lichtquellen LQ verfügt über einen Kondensor K, mit dessen Hilfe eine auf der Display-Einrichtung DE8 dargestellte Ansicht ausgeleuchtet und die Lichtquelle LQ in die Eintrittspupille EP der zugehörigen Abbildungseinrichtung AE8 abgebildet wird. Die Fläche der Lichtquelle LQ muß dabei ausreichend groß sein, um die Eintrittspupille EP vollständig ausleuchten zu können.

In Fig. 9 weist die Beleuchtungseinrichtung BE9 nur eine einzige Lichtquelle LQ9 auf. Vor der Lichtquelle LQ9 ist ein erster, großflächiger Kondensor K91 angeordnet, der zur Ausleuchtung der Display-Einrichtung DE9 dient. Diesem ersten Kondensor K91 sind drei Einzelkondensoren K92 nachgeordnet, die die Lichtquelle LQ9 in die Eintrittspupillen EP9 der einzelnen Abbildungseinrichtungen AE9 abbilden. Eine kontinuierliche Abnahme der Beleuchtungsintensität an den Rändern der Aperturblenden der Abbildungseinrichtung AE9 kann hier durch eine Blende BL9 vor der Lichtquelle LQ9 realisiert werden, die einen entsprechenden Transmissionsverlauf an ihren Rändern aufweist. Die Kondensoren K91 und K92 erzeugen ein Abbild der Blende BL9 in der Eintrittspupille EP9 der Abbildungseinrichtungen AE9. In diesem Fall können die Abbildungseinrichtungen AE9 mit herkömmlichen Aperturblenden ausgestattet sein.

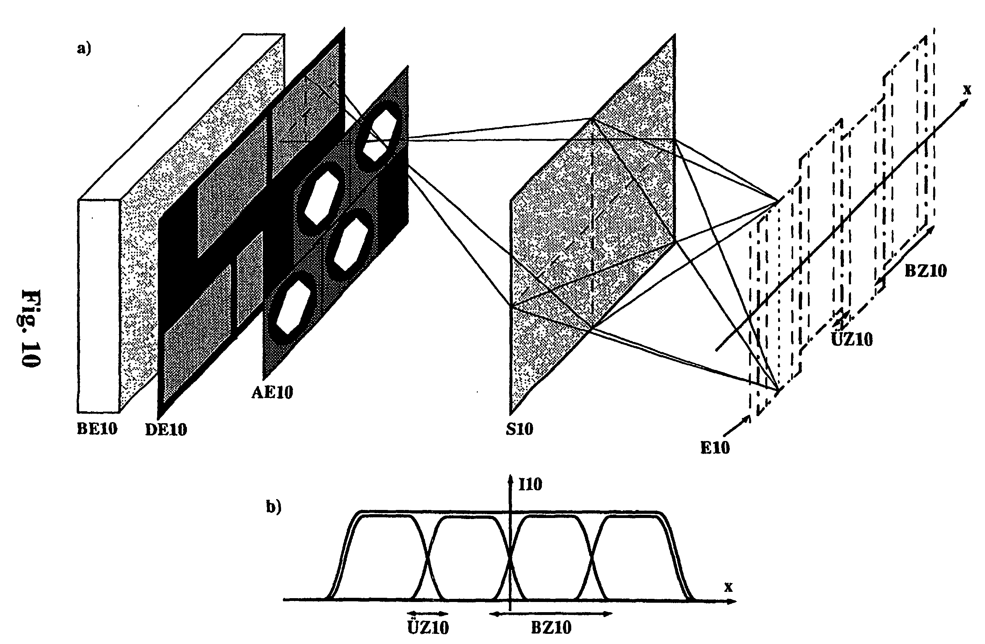

Fig. 10 zeigt eine weitere Variante einer erfindungsgemäßen Vorrichtung, bei der eine Aufteilung der Betrachtungsebene E10 in einzelne Beobachtungszonen BZ10 lediglich in horizontaler Richtung x erfolgt. Der Schirm S10 besitzt in diesem Fall in horizontaler Richtung abbildende und in vertikaler Richtung streuende Eigenschaften. Er kann hierzu beispielsweise aus einer Fresnellinse und einer Zylinderlinsen-Rasterplatte mit horizontaler Anordnung der Zylinderachsen bestehen. Die Einzelansichten auf der Display-Einheit DE10 können nun in vertikaler Richtung versetzt zueinander angeordnet werden. Abbildungseinrichtungen AE10 mit entsprechend ausgebildeten Aperturblenden ermöglichen die Erzeugung von Überlappungszonen ÜZ10 zwischen den einzelnen Beobachtungszonen BZ10, in denen die Intensität I10 in der Summe konstant bleibt (Fig. 10b).

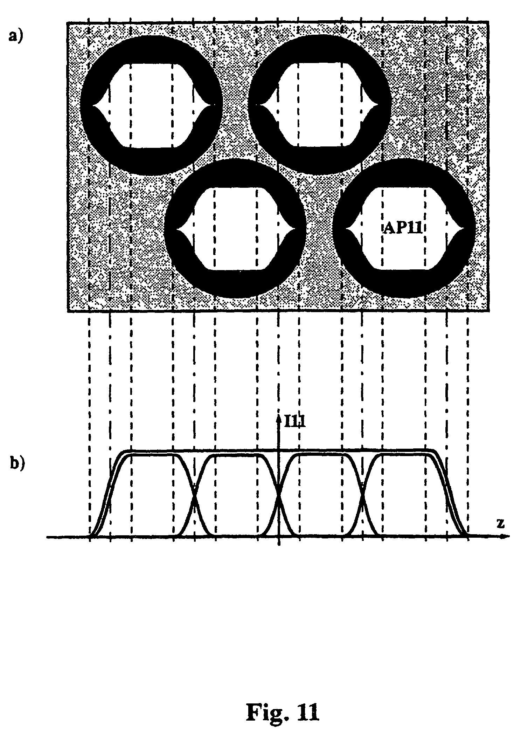

Eine mögliche Ausbildung der Austrittspupillen AP11 bei vertikalem Versatz der Abbildungseinrichtungen ist auch aus Fig. 11 ersichtlich. Eine solche vertikale Versetzung der Einzelansichten und der Abbildungseinrichtungen ermöglicht eine einfachere Realisierung der Überlappungszonen als bei Anordnung der Abbildungseinrichtungen in einer horizontalen Ebene.

## Patentansprüche

1. Verfahren zur autostereoskopischen Darstellung von dreidimensionalen Strukturen durch Abbilden mehrerer zweidimensionaler Ansichten der dreidimensionalen Struktur in eine Beobachtungsebene, wobei die zweidimensionalen Einzelansichten in entweder mit dem linken oder mit dem rechten Auge beobachtbaren Zonen erscheinen, **dadurch gekennzeichnet, daß** Überlappungsbereiche (ÜZ1, ÜZ2) zwischen den Beobachtungszonen (BZ1', BZ2'; BZ2', BZ3') erzeugt werden und daß die Beleuchtungsintensität (I) der einzelnen Beobachtungszonen (BZ1', BZ2', BZ3') an den Rändern durch Aperturblenden reduziert ist.

2. Verfahren nach Anspruch 1, **dadurch gekennzeichnet, daß** die Reduktion der Beleuchtungsintensität (I) an den Rändern der Beobachtungszonen (BZ1', BZ2', BZ3') kontinuierlich und derart erfolgt, daß sich insgesamt eine gleichmäßige Intensitätsverteilung (I2) über alle Beobachtungszonen (BZ1', BZ2', BZ3') ergibt.

3. Vorrichtung zur autostereoskopischen Darstellung von dreidimensionalen Strukturen mit einer Display-Einrichtung zur Darstellung mehrerer unterschiedlicher zweidimensionaler Ansichten der dreidimensionalen Struktur, vor der Display-Einrichtung angeordneten optischen Abbildungseinrichtungen sowie mit einem Schirm, der die aus den optischen Abbildungseinrichtungen austretenden Lichtstrahlen in eine Beobachtungsebene abbildet, wobei die zweidimensionalen Einzelansichten in entweder mit dem rechten oder dem linken Auge beobachtbaren Zonen dieser Ebene erscheinen, **dadurch gekennzeichnet, daß** die optischen Abbildungseinrichtungen (AE) jeweils Aperturblenden (AB) aufweisen, die in einem Übergangsbereich (ÜZ6) jeweils sich überlappende Beobachtungszonen (BZ6) erzeugen, wobei die Beleuchtungsintensität (I6) an den Rändern der Aperturblenden (AB) reduziert ist.

4. Vorrichtung nach Anspruch 3, **dadurch gekennzeichnet, daß** zu den Rändern der Aperturblenden (AB) hin eine stetige Abnahme der Beleuchtungsintensität (I6) derart erfolgt, daß sich insgesamt eine gleichmäßige Intensitätsverteilung über alle Beobachtungszonen (BZ6) ergibt.

5. Vorrichtung nach Anspruch 3 oder 4, **dadurch gekennzeichnet, daß** zur Reduktion der Beleuchtungsintensität (I6) an den Rändern der Aperturblenden (AB) Graukeile angeordnet sind.

6. Vorrichtung nach einem der Ansprüche 3 bis 5, **dadurch gekennzeichnet, daß** Displays mit den zweidimensionalen Ansichten der dreidimensionalen Struktur in unterschiedlichen Ebenen (E71, E72) angeordnet sind und ein Strahlteiler (ST) vorgesehen ist, der die optischen Achsen der optischen Abbildungseinrichtungen (AE7) der Displays zusammenführt.

7. Vorrichtung nach einem der Ansprüche 3 bis 6, **dadurch gekennzeichnet, daß** der Bildschirm (S5, S7, S8, S9) eine Fresnellinse ist.

8. Vorrichtung nach einem der Ansprüche 3 bis 7, **dadurch gekennzeichnet, daß** die Display-Einrichtung (DE8) mehrere Displays aufweist, denen jeweils eine Lichtquelle (LQ) und ein Kondensor (K) vorgeschaltet sind.

9. Vorrichtung nach einem der Ansprüche 3 bis 7, **dadurch gekennzeichnet, daß** der Display-Einrichtung (DE9) eine Lichtquelle (LQ9) mit einem ersten Kondensor (K91), an den sich eine der Anzahl der optischen Abbildungseinrichtungen (AE9) entsprechende Anzahl von Kondensoren (K92) anschließt, die die Lichtquelle (LQ9) in die Eingangspupillen (EP9) der Abbildungseinrichtungen (AE9) abbilden, vorgeschaltet sind.

10. Vorrichtung nach Anspruch 8 oder 9, **dadurch gekennzeichnet, daß** vor der mindestens einen Lichtquelle (LQ9) eine Blende (BL9) angeordnet ist, die die Beleuchtungsintensität an ihren Rändern kontinuierlich reduziert.

11. Vorrichtung nach einem der Ansprüche 3 bis 10, **dadurch gekennzeichnet, daß** die Display-Einrichtung (DE, DE8 bis DE10) von mindestens einem Flüssigkristall-Display gebildet ist.

12. Vorrichtung nach einem der Ansprüche 3 bis 11, **dadurch gekennzeichnet, daß** die Beobachtungsebene (E10) nur in horizontaler Richtung (x) in mehrere Beobachtungszonen (BZ10) unterteilt ist.

13. Vorrichtung nach Anspruch 12, **dadurch gekennzeichnet, daß** die optischen Abbildungseinrichtungen (AE10) in vertikaler Richtung versetzt zueinander angeordnet sind und daß der Bildschirm (S10) aus einer Fresnellinse und einer Zylinderlinsen-Rasterplatte mit horizontal verlaufenden Zylinderachsen besteht.

## Claims

1. Method for auto-stereoscopic display of three-dimensional structures by way of imaging a plurality of two-dimensional views of the three-dimensional structure in one observation plane, and the two-dimensional individual views appear in zones which are watched either by the left or the right eye, **characterised in that** overlap areas (ÜZ1, ÜZ2) are produced between the observation zones (BZ1', BZ2; BZ2', BZ3) and the illumination intensity (I) of the individual observation zones (BZ1', BZ2', BZ3') is reduced at the edges by aperture diaphragms.

2. Method according to Claim 1, **characterised in that** reduction of the illumination intensity (I) at the edges of the observation zones (BZ1', BZ2', BZ3') is carried out continuously and in such a manner that in total an equal intensity distribution (I2) over all observation zones (BZ1', BZ2', BZ3') results.

3. Device for auto-stereoscopic display of three-dimensional structures, comprising a display unit for displaying a plurality of different two-dimensional views of a three-dimensional structure, optical imaging units upstream of the display unit and a screen which images lightbeams emitted from the optical imaging devices in an observation plane, and the two-dimensional individual views appear in zones of this plane which are watched by either the right or the left eye, **characterised in that** the optical imaging units (AE) comprise respective aperture diaphragms (AB) which produce observation zones (BZ6) which overlap in a transitional area (ÜZ6), and the illumination intensity (I6) is reduced at the edges of the aperture diaphragms (AB).

4. Device according to Claim 3, **characterised in that** the illumination intensity (I6) reduces continuously towards the edges of the aperture diaphragms (AB), resulting in all in a more even intensity distribution over all observation zones (BZ6).

5. Device according to Claim 3 or 4, **characterised in that** grey wedges are arranged at the edges of the aperture diaphragms (AB) for the purpose of reducing the illumination intensity (I6).

6. Device according to one of Claims 3 to 5, **characterised in that** displays with the two-dimensional views of a three-dimensional structure are arranged in different planes (E71, E72), and a beam splitter (ST) is provided which gathers the optical axes of the optical imaging devices (AE7).

7. Device according to one of Claims 3 to 6, **characterised in that** the screen (S5, S7, S8, S9) is a Fresnel lens.

8. Device according to one of Claims 3 to 7, **characterised in that** the display unit (DE8) comprises a plurality of displays which have upstream a respective light source (LQ) and a capacitor (K).

9. Device according to one of Claims 3 to 7, **characterised in that** the display unit (DE9) has upstream a light source (LQ9) with a first capacitor (K91) to which is linked a number of capacitors (K92) corresponding with the number of optical imaging devices (AE9) which image the light source (LQ9) into the input iris (EP9) of the imaging devices (AE9).

10. Device according to Claim 8 or 9, **characterised in that** upstream of the at least one light source (LQ9) is arranged a diaphragm (BL9) which continuously reduces the illumination intensity at its edges.

11. Device according to one of Claims 3 to 10, **characterised in that** the display unit (DE, DE8 to DE10) is established by at least one liquid-crystal display.

12. Device according to one of Claims 3 to 11, **characterised in that** the observation plane (E10) is only in the horizontal direction (x) divided into a plurality of observation zones (BZ10).

13. Device according to Claim 12, **characterised in that** the optical imaging devices (AE10) are arranged transposed relative to each other in the vertical direction, and the screen (S10) is composed of a Fresnel lens and a cylinder-lens raster plate with horizontally extending cylinder axes.

## Revendications

1. Procédé pour la représentation autostéréoscopique de structures tridimensionnelles par reproduction de plusieurs vues bidimensionnelles de la structure tridimensionnelle dans un plan d'observation, les vues bidimensionnelles individuelles apparaissant dans des zones observables soit avec l'oeil gauche soit avec l'oeil droit, **caractérisé en ce que** des zones de chevauchement (ÜZ1, ÜZ2) sont créées entre les zones d'observation (BZ1', BZ2' ; BZ2', BZ3'), et **en ce que** l'intensité d'éclairage (I) des différentes zones d'observation (BZ1', BZ2', BZ3') est réduite au niveau des bords par des diaphragmes.

2. Procédé selon la revendication 1, **caractérisé en ce que** la réduction de l'intensité d'éclairage (I) au niveau des bords des zones d'observation (BZ1', BZ2', BZ3') s'effectue de manière continue et de façon à obtenir globalement une répartition d'intensité régulière (I2) sur toutes les zones d'observation (BZ1', BZ2', BZ3').

3. Dispositif pour la représentation autostéréoscopique de structures tridimensionnelles avec un dispositif de visualisation pour la représentation de plusieurs vues bidimensionnelles différentes de la structure tridimensionnelle, avec des dispositifs de reproduction optiques disposés devant le dispositif de visualisation ainsi qu'avec un écran qui reproduit dans un plan d'observation les rayons lumineux émis par les dispositifs de reproduction optiques, les vues bidimensionnelles individuelles apparaissant dans des zones de ce plan observables soit avec l'oeil droit soit avec l'oeil gauche, **caractérisé en ce que** les dispositifs de reproduction optiques (AE) comportent chacun des diaphragmes (AB) qui créent dans une zone de transition (ÜZ6) des zones d'observation chevauchantes (BZ6), l'intensité d'éclairage (I6) étant réduite au niveau des bords des diaphragmes (AB).

4. Dispositif selon la revendication 3, **caractérisé en ce qu'**une diminution progressive de l'intensité d'éclairage (I6) se produit en direction des bords des diaphragmes (AB), de façon à obtenir globalement une répartition d'intensité régulière sur toutes les zones d'observation (BZ6).

5. Dispositif selon la revendication 3 ou 4, **caractérisé en ce que** des coins photométriques sont disposés au niveau des bords des diaphragmes (AB) pour réduire l'intensité d'éclairage (I6).

6. Dispositif selon l'une des revendications 3 à 5, **caractérisé en ce que** des moyens de visualisation avec les vues bidimensionnelles de la structure tridimensionnelle sont disposés dans divers plans (E71, E72) et un séparateur de rayons (ST) est prévu, lequel réunit les axes optiques des dispositifs de reproduction optiques (AE7) des moyens de visualisation.

7. Dispositif selon l'une des revendications 3 à 6, **caractérisé en ce que** l'écran (S5, S7, S8, S9) est une lentille de Fresnel.

8. Dispositif selon l'une des revendications 3 à 7, **caractérisé en ce que** le dispositif de visualisation (DE8) comporte plusieurs moyens de visualisation dont chacun est précédé d'une source lumineuse (LQ) et d'un condenseur (K).

9. Dispositif selon l'une des revendications 3 à 7, **caractérisé en ce que** le dispositif de visualisation (DE9) est précédé d'une source lumineuse (LQ9) avec un premier condenseur (K91) auquel est connecté un nombre de condenseurs (K92) correspondant au nombre de dispositifs de reproduction optiques (AE9), lesquels condenseurs reproduisent la source lumineuse (LQ9) dans les pupilles d'entrée (EP9) des dispositifs de reproduction (AE9).

10. Dispositif selon la revendication 8 ou 9, **caractérisé en ce que** devant au moins une source lumineuse (LQ9) est disposé un iris (BL9) qui réduit l'intensité d'éclairage de manière continue au niveau de ses bords.

11. Dispositif selon l'une des revendications 3 à 10, **caractérisé en ce que** le dispositif de visualisation (DE, DE8 à DE10) est formé par au moins un afficheur à cristaux liquides.

12. Dispositif selon l'une des revendications 3 à 11, **caractérisé en ce que** le plan d'observation (E10) n'est divisé en plusieurs zones d'observation (BZ10) que dans la direction horizontale (x).

13. Dispositif selon la revendication 12, **caractérisé en ce que** les dispositifs de reproduction optiques (AE10) sont disposés avec un décalage mutuel dans la direction verticale, et **en ce que** l'écran (S10) est constitué d'une lentille de Fresnel et d'une plaque tramée à lentilles cylindriques avec des axes de cylindres s'étendant horizontalement.
